# EUROPEAN PATENT APPLICATION

(11) **EP 1 452 833 A2**
(43) Date of publication of application: **01.09.2004**
(21) Application number: 04003883.8
(22) Date of filing: 20.02.2004
(51) Int. Cl.: G01D 5/245

(54) **Rotary encoder**

(30) Priority: 26.02.2003 JP 2003048595
(71) Applicant: FANUC LTD, Minamitsuru-gun, Yamanashi 401-0597 (JP)
(72) Inventor: Taniguchi, Mitsuyuki, Gotenba-shi Shizuoka 412-0045 (JP); Imai, Keisuke, Room 10-206, Minamitsuru-gun Yamanashi 401-0511 (JP)
(74) Representative: Schmidt, Steffen J., Dipl.-Ing.

(57) **Abstract**

A rotary encoder and a kit thereof. The kit for a rotary encoder includes a plurality of signal generating members for generating mutually different signals, any selected one of the signal generating members being able to be attached in an exchangeable manner to a rotary body; and a signal sensing unit arranged in close proximity to one selected signal generating member attached to the rotary body, for sensing a signal generated due to a rotation of the signal generating member. The signal generating members are respectively formed in such a manner that the numbers of signal-cycles and the signal-intervals in signals generated during a unit rotation of respective signal generating members are different from each other, while the products of the numbers of signal-cycles multiplied by the signal-intervals in the signals are generally identical to each other. Each of the signal generating members is a circular plate member having an outer circumferential surface, and a signal generating element for generating the signal is provided on the outer circumferential surface of each signal generating member. In this arrangement, the signal generating members have outer diameters generally identical to each other.

## Description

### BACKGROUND OF THE INVENTION

### 1. Field of the Invention

The present invention relates generally to a rotary encoder.

### 2. Description of the Related Art

Conventionally, a rotary encoder has been used as means for detecting the speed or position of an object to be driven in a motion control in, such as, a machine tool, FA (Factory Automation) equipment or OA (Office Automation) equipment. The rotary encoder generally includes a signal generating member joined to a rotary body as the object detected by the encoder, such as a rotary output shaft of a drive source, and a signal sensing unit for sensing a signal generated due to the signal generating member rotating together with the rotary body.

The signal generating member is ordinarily a circular plate or cylindrical drum member, having an outer circumferential surface and an axial end surface, and is coaxially secured to the rotary body. The signal generating member is provided, on the outer circumferential surface or the axial end surface, with a signal generating element capable of generating a periodical signal according to the rotation of the signal generating member. The signal sensing unit is statically arranged in close proximity to, but not in contact with, the signal generating element of the signal generating member. A magnetic or an optical system is generally used as a signal sensing system.

In conventional rotary encoders, there has been a proposal for enabling plural types of signals, representing mutually different waveforms, to be output. For example, Japanese Unexamined Patent Publication (Kokai) No. 8-178692 (JP8-178692A) discloses a rotary encoder which includes a single cylindrical magnetic medium (a signal generating member) fixed to a rotary shaft, on the outer circumferential surface of which a plurality of magnetic tracks (signal generating elements) having arrays of magnetic poles with different pitches are formed, and magnetic sensors (signal sensing units) arranged to individually face, oppositely, the respective magnetic tracks. JP8-178692A also discloses a rotary encoder which includes a plurality of disk-shaped magnetic mediums having different outer diameters, on the respective outer circumferential surfaces of which magnetic tracks having arrays of magnetic poles with identical pitches are formed, the magnetic mediums being fixed to a common rotary shaft, and magnetic sensors arranged to be individually facing oppositely to the respective magnetic tracks. In both structures, it is possible to simultaneously obtain plural types of output signals having the different numbers of pulses during a single rotation.

Japanese Unexamined Patent Publication (Kokai) No. 2002-228485 (JP2002-228485A) discloses a rotary encoder wherein a track with magnetized patterns (a signal generating element) is formed on the outer circumferential surface of a magnetic drum (a signal generating member) in such a manner that the phase difference of the magnetized patterns occurs across the track, and a plurality of MR (Magneto Resistive) elements of a magnetic sensor (a signal sensing unit) are formed to be linearly aligned in a direction perpendicular to the rotating direction of the magnetic drum, so that the plural types of output signals with phase difference can be simultaneously output. In this rotary encoder, it is possible to sense the signal, using the identical magnetic sensor, even when the pitch of the magnetized patterns on the magnetic drum is changed.

In this connection, the detection accuracy (or resolution) of the rotary encoder usually has a positive correlation to the number of signal-cycles in a signal generated during a unit rotation of the signal generating member, so that it is possible to improve the detection accuracy by increasing the number of signal-cycles per unit rotation. In order to increase the number of signal-cycles per unit rotation, it is effective that a signal-generation pitch (e.g., the pitch of magnetized patterns) is reduced while the diametral size of the annular track of the signal generating element (e.g., the outer diameter of the signal generating member) is not changed, or alternatively, that the diametral size of the annular track is increased while the signal-generation pitch is not changed.

However, if the diametral size of the annular track of the signal generating element is increased, the outer diameter of the signal generating member may be increased accordingly. If the outer diameter of the signal generating member is increased, it may be necessary to change the location of the other components of the rotary encoder (e.g., the signal sensing unit) in order to ensure the space for placing the signal generating member. In this case, a problem arises in which different structural designs for a standard detection accuracy and for a high detection accuracy are required in the rotary encoder and/or equipment incorporating the encoder. This problem is clarified as an issue of location of the signal sensing unit, especially in the case where a set of rotary encoders, including encoders of standard accuracy and high accuracy, is to be prepared in such a configuration that the signal generating element is formed on the outer circumferential surface of the signal generating member.

In the above context, in the rotary encoder described in JP8-178692A, it is possible to provide two magnetic tracks, capable of generating signals having different waveforms for standard accuracy and high accuracy, on the outer circumferential surface of one cylindrical magnetic medium. In practice, however, there is a certain application of the rotary encoder, which sometimes does not require two kinds of resolutions. In such application, the unused signal may become redundant, and besides, the problems such as the increase in manufacturing cost of the magnetic medium and in axial dimension of the latter arise due to the increase of the magnetic tracks.

Also, in the rotary encoder described in JP2002-228485A, it is possible to change the pitch of magnetized patterns on the magnetic drum without altering the structure of the magnetic sensor. However, when the outer diameter of the magnetic drum must be changed, it becomes also necessary to change the location of the magnetic sensor. Therefore, also in this arrangement, different structural designs for standard detection accuracy and high detection accuracy are required in the rotary encoder and/or in the equipment incorporating the encoder.

It should be noted that, in the present application, the phrase "the number of signal-cycles" means the number of single-period waveforms in a signal, in which the signal may show any waveform, such as a sinusoidal waveform, a rectangular waveform or pulse, and so on. Also, it should be noted that, in the present application, the term "signal-interval" means an interval between two same-phase points in two adjacent "signal-cycles" (or single-period waveforms).

### SUMMARY OF THE INVENTION

It is an object of the present invention to make it possible, when a set of rotary encoders having different detection accuracies or resolutions is to be prepared, to easily provide the rotary encoders with different resolutions on demand, without changing the structural design of the rotary encoder and/or equipment incorporating the encoder.

To accomplish the above object, the present invention provides a kit for a rotary encoder, comprising a plurality of signal generating members for generating mutually different signals, any selected one of the signal generating members being able to be attached in an exchangeable manner to a rotary body; and a signal sensing unit arranged in close proximity to one selected signal generating member attached to the rotary body, for sensing a signal generated due to a rotation of the signal generating member; wherein the plurality of signal generating members are respectively formed in such a manner that numbers of signal-cycles and signal-intervals in signals generated during a unit rotation of respective signal generating members are different from each other, while products of the numbers of signal-cycles multiplied by the signal-intervals in the signals are generally identical to each other.

In the above kit for a rotary encoder, each of the plurality of signal generating members may be a circular plate member having an outer circumferential surface, and a signal generating element for generating the signal may be provided on the outer circumferential surface of each signal generating member.

In this arrangement, the plurality of signal generating members may have outer diameters generally identical to each other.

Also, each of the plurality of signal generating members may be an annular member having an inner circumferential surface, and wherein an attachment portion for detachably attaching each signal generating member to the rotary body may be provided in the inner circumferential surface.

In this arrangement, the plurality of signal generating members may have inner diameters generally identical to each other.

Further, each of the plurality of signal generating members may include a signal generating element comprising at least one tooth.

Alternatively, each of the plurality of signal generating members may include a signal generating element comprising at least one magnetized pattern.

The present invention also provides a rotary encoder, comprising a first signal generating member for generating a first signal, the first signal generating member being able to be attached to a rotary body and being exchangeable with a second signal generating member for generating a second signal different from the first signal; and a signal sensing unit arranged in close proximity to the first signal generating member attached to the rotary body, for sensing the first signal generated due to a rotation of the first signal generating member; wherein the first signal generating member is formed in such a manner that the number of signal-cycles and the signal-interval in the first signal generated during a unit rotation of the first signal generating member is different from the number of signal-cycles and the signal-interval in the second signal generated during a unit rotation of the second signal generating member, while the product of the number of signal-cycles multiplied by the signal-interval in the first signal is generally identical to the product of the number of signal-cycles multiplied by the signal-interval in the second signal.

### BRIEF DESCRIPTION OF THE DRAWINGS

The above and other objects, features and advantages of the present invention will become more apparent from the following description of preferred embodiments in connection with the accompanying drawings, wherein:
Fig. 1 is an illustration schematically showing a rotary encoder and a kit thereof, according to one embodiment of the present invention;
Fig. 2A is an illustration diagrammatically showing a signal generating element of a first signal generating member as one example usable in the rotary encoder of Fig. 1;
Fig. 2B is an illustration diagrammatically showing a signal generating element of a second signal generating member as one example usable in the rotary encoder of Fig. 1;
Fig. 3A is an illustration diagrammatically showing a signal generating element of a first signal generating member as another example usable in the rotary encoder of Fig. 1;
Fig. 3B is an illustration diagrammatically showing a signal generating element of a second signal generating member as another example usable in the rotary encoder of Fig. 1;
Fig. 4 is an illustration schematically showing a modification of a signal generating member;
Figs. 5A and 5B are illustrations schematically showing a signal sensing principle in a rotary encoder including a signal generating member provided with a plurality of teeth as a signal generating element;
Fig. 6 is an illustration schematically showing a signal sensing principle in a rotary encoder including a signal generating member provided with a plurality of magnetized patterns as a signal generating element; and
Fig. 7 is an illustration showing one embodiment of signal curves sensed by a signal sensing unit in the rotary encoder of Fig. 1.

### DETAILED DESCRIPTION

The embodiments of the present invention are described below in detail, with reference to the accompanying drawings. In the drawings, the same or similar components are denoted by common reference numerals.

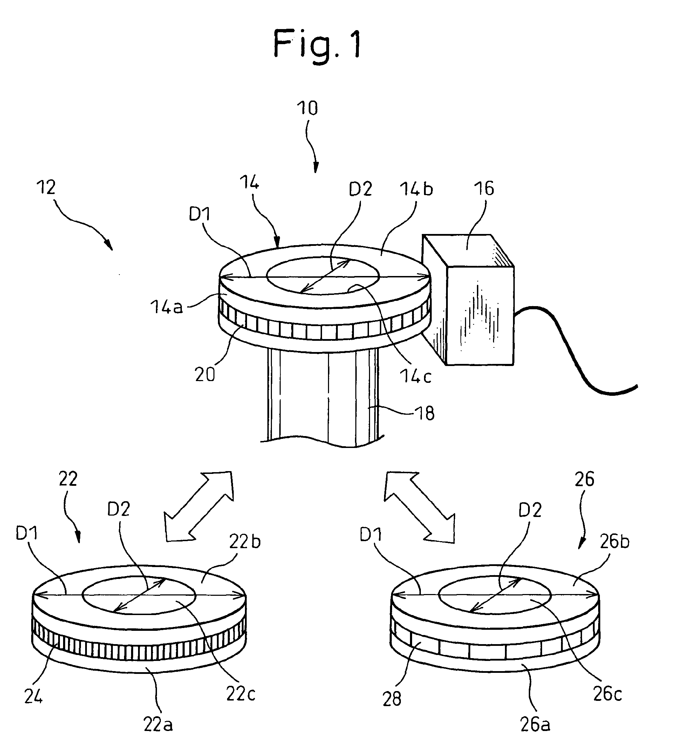

Referring to the drawings, Fig. 1 schematically shows a rotary encoder 10 and a kit 12 thereof, according to one embodiment of the present invention. The rotary encoder 10 includes a first signal generating member 14 for generating a first signal and a signal sensing unit 16 for sensing the first signal generated due to the rotation of the first signal generating member 14. The first signal generating member 14 is a circular plate member having an outer circumferential surface 14a and an axial end surface 14b, and is coaxially secured to a rotary body 18 as the object detected by the encoder, such as a rotary output shaft of a drive section. The first signal generating member 14 is provided on the outer circumferential surface 14a with a signal generating element 20 capable of generating a periodical first signal according to the rotation of the first signal generating member 14. The signal sensing unit 16 is statically arranged in close proximity to but not in contact with the signal generating element 20 of the first signal generating member 14 attached to the rotary body 18, and senses the first signal generated in a periodical waveform depending on a signal-generation pitch of the signal generating element 20 during a period when the first signal generating member 14 rotates together with the rotary body 18.

The first signal generating member 14 is detachably attached to the objective rotary body 18, and is exchangeable with a second signal generating member 22 for generating a second signal different from the first signal. The second signal generating member 22 is a circular plate member having an outer circumferential surface 22a and an axial end surface 22b, and is coaxially secured to the objective rotary body 18, in place of the first signal generating member 14. The second signal generating member 22 is provided on the outer circumferential surface 22a with a signal generating element 24 capable of generating the periodical second signal according to the rotation of the second signal generating member 22. The signal sensing unit 16 is statically arranged in close proximity to but not in contact with the signal generating element 24 of the second signal generating member 22 attached to the rotary body 18, and senses the second signal generated in a periodical waveform (different from the waveform of the first signal) depending on a signal-generation pitch of the signal generating element 24 during a period when the second signal generating member 22 rotates together with the rotary body 18.

Further, the first signal generating member 14 is exchangeable with a third signal generating member 26 for generating a third signal different from the first and second signals. The third signal generating member 26 is a circular plate member having an outer circumferential surface 26a and an axial end surface 26b, and is coaxially secured to the objective rotary body 18, in place of the first signal generating member 14. The third signal generating member 26 is provided on the outer circumferential surface 26a with a signal generating element 28 capable of generating the periodical third signal according to the rotation of the third signal generating member 26. The signal sensing unit 16 is statically arranged in close proximity to but not in contact with the signal generating element 28 of the third signal generating member 26 attached to the rotary body 18, and senses the third signal generated in a periodical waveform (different from the waveforms of the first and second signal) depending on a signal-generation pitch of the signal generating element 28 during a period when the third signal generating member 26 rotates together with the rotary body 18.

The kit 12 of the rotary encoder 10 is constituted by previously providing a plurality of signal generating members 14, 22, 26, ... having the above-described correlation.

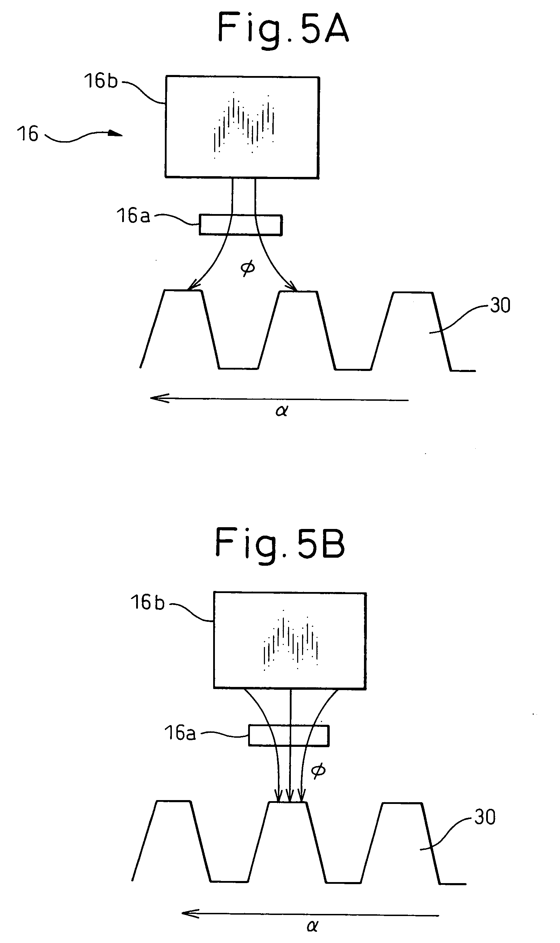

The rotary encoder 10 adopts a magnetic signal-sensing system, which will be described below with reference to Figs. 5A to 6. It should be noted that the present invention does not restrict the signal-sensing system to the magnetic type, but can adopt another signal-sensing system such as an optical type. Also, it is possible to replace the signal generating members 14, 22, 26, ... provided on the outer circumferential surfaces with the signal generating elements 20, 24, 28, ... by the signal generating members 14, 22, 26, ... provided on the axial end surfaces with the signal generating elements.

In the case of magnetic signal-sensing system, each signal generating member 14, 22, 26, ... includes a magnetic-flux density varying element, such as at least one tooth or at least one magnetized pattern, as the signal generating element 20, 24, 28, ... provided on the axial end surface. The signal generating member provided with at least one tooth as the signal generating element is a gear-shaped member made of a ferromagnetic material, which includes, e.g., an array of teeth at regular pitches along the outer circumferential surface thereof. The signal generating member provided with at least one magnetized pattern as the signal generating element is made of a non-magnetic material and includes an annular magnetic film formed along the outer circumferential surface thereof, which includes, e.g., an array of magnetized patterns at regular pitches. The signal sensing unit 16 is provided with a magnetic sensing element, such as a MR element, at a position oppositely facing the signal generating element formed by the tooth or the magnetized pattern.

Figs. 5A and 5B show a principle of signal sensing in the rotary encoder which includes the signal generating member provided with a plurality of teeth 30 as the signal generating element. In this example, the teeth 30 are formed at regular pitches on the outer circumferential surface of the signal generating member. The signal sensing unit 16 includes a magnetic sensing element 16a and a bias magnet 16b as illustrated.

Fig. 5A illustrates a state in which a bottom land of adjacent teeth 30 oppositely faces the magnetic sensing element 16a of the signal sensing unit 16 at a certain rotational position of the signal generating member. In this rotational position, the magnetic flux density of a magnetic flux φ generated by the bias magnet 16b, which passes through the magnetic sensing element 16a, is relatively low, so that a signal strength sensed by the magnetic sensing element 16a is reduced. On the other hand, Fig. 5B illustrates a state in which a crest of one tooth oppositely faces the magnetic sensing element 16a of the signal sensing unit 16 at another rotational position of the signal generating member. In this rotational position, the magnetic flux density of a magnetic flux φ generated by the bias magnet 16b, which passes through the magnetic sensing element 16a, is relatively high, so that a signal strength sensed by the magnetic sensing element 16a is increased.

Therefore, when the signal generating member rotates, the magnetic flux density passing through the magnetic sensing element 16a increases or decreases at a certain period corresponding to the pitches of teeth 30, as a result of the movement of the teeth array (in an arrow α). The magnetic sensing element 16a senses a change in the magnetic flux density as a change in voltage in the form of, e.g., a sinusoidal wave as shown in Fig. 7. This change in voltage is caused in correspondence to the pitches of teeth 30, so that the rotary encoder outputs a signal (such as a rectangular-pulse signal or a sinusoidal-wave signal) depending on the pitches of teeth 30 of the signal generating member.

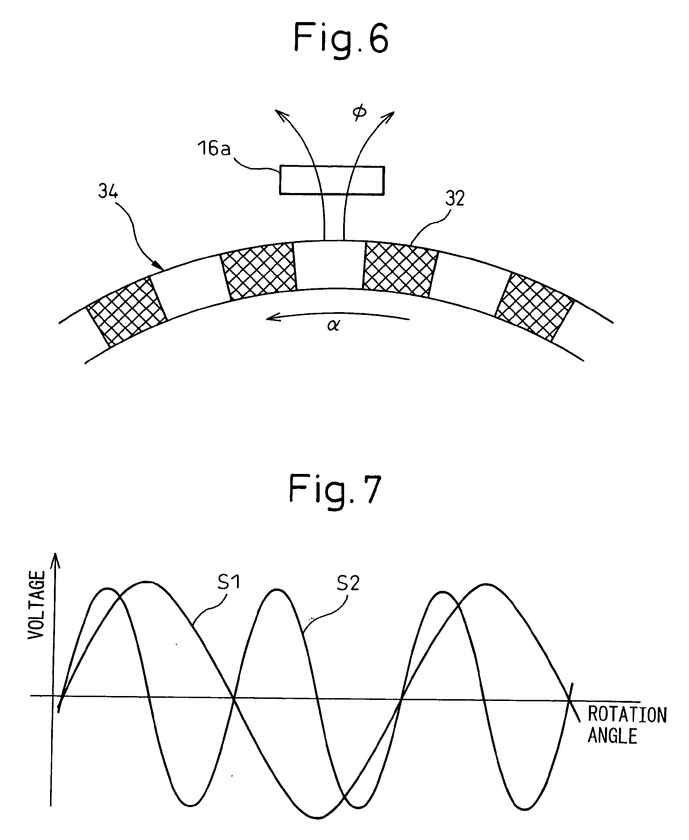

Fig. 6 shows a principle of signal sensing in the rotary encoder which includes the signal generating member provided with a plurality of magnetized patterns 32 as the signal generating element. In this example, the magnetized patterns 32 are formed at regular pitches in a magnetic film 34 applied onto the outer circumferential surface of the signal generating member. The magnetic sensing element 16a senses a change in the magnetic flux density, increasing or decreasing at a certain period corresponding to the pitches of magnetized patterns 32, as a result of the movement of the magnetized patterns 32 (in an arrow α), as a change in voltage in the form of, e.g., a sinusoidal wave as shown in Fig. 7. This change in voltage is caused in correspondence to the pitches of magnetized patterns 32.

According to the above principle, the rotary encoder 10 shown in Fig. 1 generates by any one of the signal generating members 14, 22, 26, ..., a periodical signal having the predetermined number of signal-cycles (pulses or peaks) and the predetermined signal-interval (pulse-interval or peak-interval) per unit rotation, and outputs the periodical signal sensed by the signal sensing unit 16 as a detection signal in the form of pulse or sinusoidal-wave to a control section in the equipment incorporating the encoder. Consequently, the rotational position and/or rotational frequency of the rotary body 18 is detected and, as a result, the current position and/or moving speed of a driven body, in the equipment incorporating the encoder, is determined.

In the rotary encoder 10 and the kit 12 thereof, the first signal generating member 14 is formed in such a manner that the number of signal-cycles and the signal-interval in the first signal generated during the unit rotation of the first signal generating member are different from the number of signal-cycles and the signal-interval in the second signal generated during the unit rotation of the second signal generating member 22, while the product of the number of signal-cycles multiplied by the signal-interval in the first signal per unit rotation is generally identical to the product of the number of signal-cycles multiplied by the signal-interval in the second signal per unit rotation, as the characteristic features of the invention. In the same way, the first signal generating member 14 is formed in such a manner that the number of signal-cycles and the signal-interval in the first signal generated during the unit rotation of the first signal generating member are different from the number of signal-cycles and the signal-interval in the third signal generated during the unit rotation of the third signal generating member 26, while the product of the number of signal-cycles multiplied by the signal-interval in the first signal per unit rotation is generally identical to the product of the number of signal-cycles multiplied by the signal-interval in the third signal per unit rotation. In other words, the plurality of signal generating members constituting the kit 12 are respectively formed in such a manner that the numbers of signal-cycles and the signal-intervals in signals generated during a unit rotation of respective signal generating members are different from each other, while the products of the numbers of signal-cycles multiplied by the signal-intervals in these signals per unit rotation are generally identical to each other.

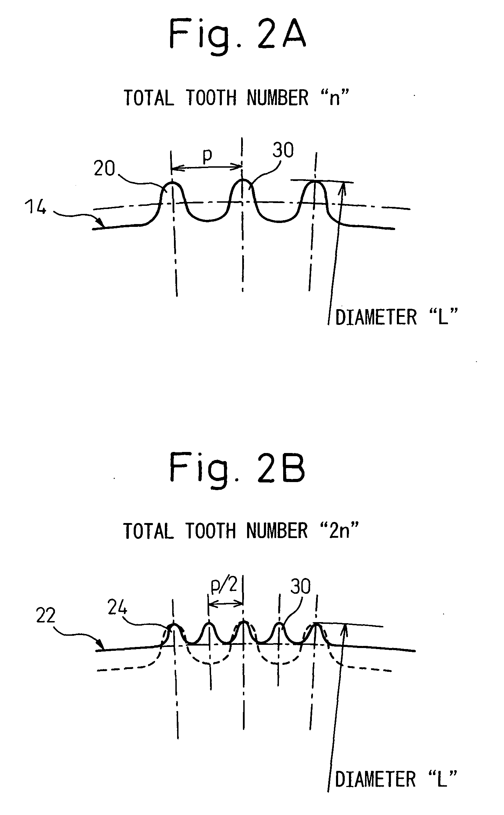

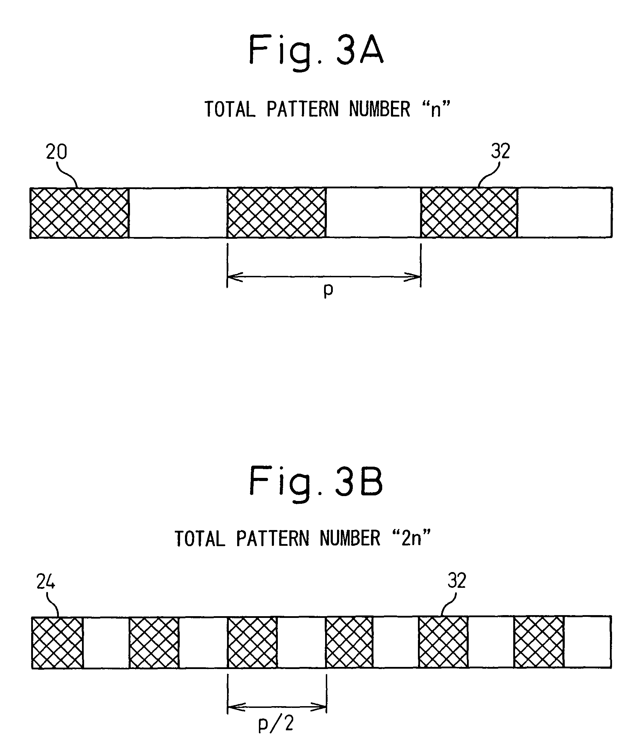

The relationship between the numbers of signal-cycles and the signal-intervals in the signals generated during a unit rotation of the first and second signal generating members 14, 22 will be described below with reference to Figs. 2A to 3B by way of examples. In this connection, Figs. 2A and 2B illustrate an example in which the signal generating element 20, 24 provided in each of the first and second signal generating members 14, 22 is comprised of a plurality of teeth 30, and Figs. 3A and 3B illustrate an example in which the signal generating element 20, 24 provided in each of the first and second signal generating members 14, 22 is comprised of a plurality of magnetized patterns 32.

In the signal generating element 20 provided in the first signal generating member 14, if the number of teeth per unit rotation (i.e., the total tooth number per single rotation) is represented by "n" and the pitch between the adjacent teeth 30 is represented by "p" as shown in Fig. 2A, the first signal generated by the signal generating element 20 possesses a signal-interval (or peak-interval) "q" and the number of signal-cycles (or peaks) "n" per unit rotation of the first signal generating member 14 (as shown by, e.g., a curve S1 in Fig. 7). Consequently, the product of the number of signal-cycles multiplied by the signal-interval in the first signal S1 generated during the unit rotation of the first signal generating member 14 is "n × q".

On the other hand, in the signal generating element 24 provided in the second signal generating member 22, if the number of teeth per unit rotation (i.e., the total tooth number per single rotation) is represented by "2n" and the pitch between the adjacent teeth 30 is represented by "p/2" as shown in Fig. 2B, the second signal generated by the signal generating element 24 possesses a signal-interval (or peak-interval) "q/2" and the number of signal-cycles (or peaks) "2n" per unit rotation of the second signal generating member 22 (as shown by, e.g., a curve S2 in Fig. 7). Consequently, the product of the number of signal-cycles multiplied by the signal-interval in the second signal S2 generated during the unit rotation of the second signal generating member 22 is "2n × q/2 = n × q".

Therefore, in the above configuration, the respective products of the numbers of signal-cycles multiplied by the signal-intervals in the first and second signals generated during the unit rotations of the first and second signal generating members 14, 22 are identical values "n × q".

In this connection, the respective products of the total tooth numbers multiplied by the teeth pitches in the first and second signal generating members 14, 22 are identical values "n × p". This value "np" corresponds to the overall circumferential length of the outer circumferential surface 14a, 22a (Fig. 1) of each of the first and second signal generating member 14, 22, on which the signal generating element 20, 24 is provided. Consequently, the first and second signal generating members 14, 22, in which the values "np" are identical, possess diametral sizes (diameters "L"), identical to each other, of the respective outer circumferential surfaces 14a, 22a. In other words, the first and second signal generating members 14, 22, in which the respective products "nq" of the numbers of signal-cycles multiplied by the signal-intervals in the first and second signals generated during the unit rotations are identical, have outer diameters D1 (Fig. 1) identical to each other.

Similarly, in the signal generating element 20 provided in the first signal generating member 14, if the number of magnetized patterns per unit rotation (i.e., the total magnetized-pattern number per single rotation) is represented by "n" and the pitch between the adjacent magnetized patterns 32 is represented by "p" as shown in Fig. 3A, the first signal generated by the signal generating element 20 possesses a signal-interval (or peak-interval) "q" and the number of signal-cycles (or peaks) "n" per unit rotation of the first signal generating member 14 (as shown by, e.g., a curve S1 in Fig. 7). Consequently, the product of the number of signal-cycles multiplied by the signal-interval in the first signal S1 generated during the unit rotation of the first signal generating member 14 is "n × q".

On the other hand, in the signal generating element 24 provided in the second signal generating member 22, if the number of magnetized patterns per unit rotation (i.e., the total magnetized-pattern number per single rotation) is represented by "2n" and the pitch between the adjacent magnetized patterns is represented by "p/2" as shown in Fig. 3B, the second signal generated by the signal generating element 24 possesses a signal-interval (or peak-interval) "q/2" and the number of signal-cycles (or peaks) "2n" per unit rotation of the second signal generating member 22 (as shown by, e.g., a curve S2 in Fig. 7). Consequently, the product of the number of signal-cycles multiplied by the signal-interval in the second signal S2 generated during the unit rotation of the second signal generating member 22 is "2n × q/2 = n × q".

Therefore, in the above configuration, the respective products of the numbers of signal-cycles multiplied by the signal-intervals in the first and second signals generated during the unit rotations of the first and second signal generating members 14, 22 are identical values "n × q". Further, the respective products of the total magnetized-pattern numbers multiplied by the magnetized-patterns pitches in the first and second signal generating members 14, 22 are identical values "n × p". This value "np" corresponds to the overall circumferential length of the outer circumferential surface 14a, 22a (Fig. 1) of each of the first and second signal generating member 14, 22, on which the signal generating element 20, 24 is provided. Consequently, also in this configuration, the first and second signal generating members 14, 22 possess outer diameters D1 (Fig. 1) identical to each other.

In the rotary encoder 10, if the outer diameters D1 of the first and second signal generating members 14, 22 are identical to each other, it is possible to maintain the distance between each of the signal generating elements 20, 24 and the signal sensing unit 16 (the magnetic sensing element 16a) constant, without changing the location of the signal sensing unit 16, in any case where either one of first and second signal generating members 14, 22 is attached to the rotary body 18. Thus, in the rotary encoder 10 and the kit 12 thereof, a plurality of signal generating members 14, 22, 26, ..., formed in such a manner that the numbers of signal-cycles and the signal-intervals in signals generated during the unit rotations of respective signal generating members are different from each other while the products of the numbers of signal-cycles multiplied by the signal-intervals therein are generally identical to each other, is prepared as a set of components compatible for one rotary encoder 10 in correspondence to a plurality of assumable detection accuracies (or resolutions), and it is thereby possible to select a desired signal generating member from this set of components, depending upon a required detection accuracy, and to suitably attach it to the rotary body 18 for use. In this connection, the signal generating members 14, 22, 26, ... have outer diameters identical to each other, so that it is possible to easily provide the rotary encoders 10 with different resolutions on demand, without changing the structural design of the rotary encoder 10 and/or the equipment incorporating the encoder. Further, only one of the signal generating members 14, 22, 26, ..., corresponding to the required detection accuracy, is attached to the rotary body 18, whereby it is possible to prevent the signal generating member from increasing in size along a rotation axial thereof, and consequently to facilitate the reduction in dimensions of the rotary encoder 10 and/or the equipment incorporating the encoder.

It should be noted that, in practice, the plurality of signal generating members 14, 2, 26, ... may include certain deviations in the outer diameters D1 or misalignments, due to errors in the making thereof or in the attaching thereof to the rotary body 18. Such deviations or misalignments may influence the strength of signals sensed by the signal sensing unit 16, but is approvable if such influences are within a predetermined tolerance. In the present invention, the feature that the products of the numbers of signal-cycles multiplied by the signal-intervals in signals generated during the unit rotations of respective signal generating members are "generally identical" to each other means that the deviations in the outer diameters or misalignments in the signal generating members are within a predetermined tolerance.

In the rotary encoder 10 and the kit 12 thereof, each of the signal generating members 14, 22, 26, ... may be formed as an annular member having an inner circumferential surface 14c, 22c, 26c, ... (Fig. 1). In this arrangement, the inner circumferential surface 14c, 22c, 26c, ... constitutes an attachment portion (a through hole in the illustrated embodiment) for detachably attaching each signal generating member 14, 22, 26, ... formed as the annular member to the rotary body 18 as being detected. Further, the plurality of signal generating members 14, 22, 26, ... are formed so as to have diametral sizes of the respective inner circumferential surfaces 14c, 22c, 26c, ... (i.e., inner diameters D2 as shown in Fig. 1) generally identical to each other. According to this arrangement, it is possible to easily coaxially attach the desired one of signal generating members 14, 22, 26, ... as suitably selected to the rotary body 18 as will be detected, without changing the structure or size of an attachment portion on the rotary body 18 for receiving the signal generating member.

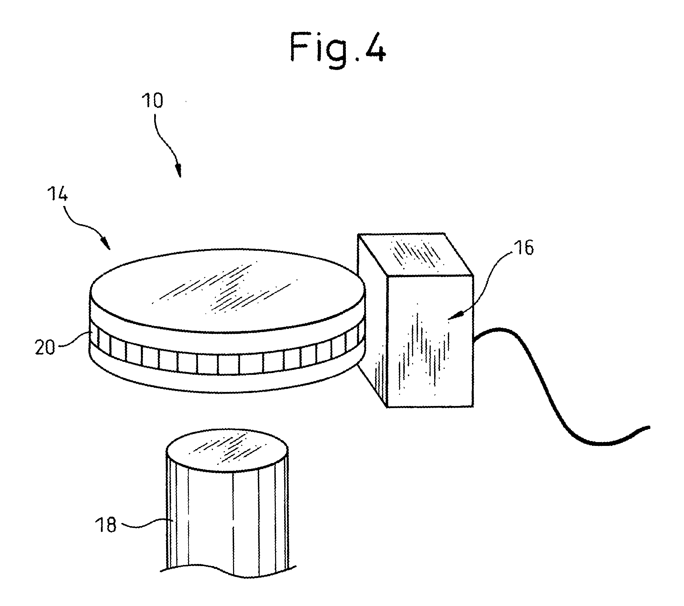

As the attachment portion of each of the signal generating member 14, 22, 26, ... to the rotary body 18, a bottomed hole for partially receiving the distal end of the rotary body 18 or a structure having no receptive hole may be used (see Fig. 4), in place of the through hole defined by the inner circumferential surface 14c, 22c, 26c, ... as illustrated. Various systems, such as a bolt fastening, may also be adopted as a securing system. In any case, the plurality of signal generating members 14, 22, 26, ... having substantially identical structure and size, except that the configuration of the signal generating elements 20, 24, 28, ... are different from each other, can be used.

Further, in an arrangement wherein the signal generating members 14, 22, 26, ... having the signal generating elements provided on the axial end surfaces 14b, 22b, 26b, ... are used, it is possible to constitute the diameters "L" of annular areas, on which the signal generating elements are formed, to be generally identical to each other, on the axial end surfaces 14b, 22b, 26b, ... of the signal generating members 14, 22, 26, ..., due to the above-described characteristic features (i.e., correlations) of the signal generating elements 20, 24, 28, .... Also in this arrangement, it is possible to easily provide the rotary encoders 10 with different resolutions on demand, without changing the structural design of the rotary encoder 10 and/or the equipment incorporating the encoder.

While the invention has been described with reference to specific preferred embodiments, it will be understood by those skilled in the art that various changes and modifications may be made thereto without departing from the spirit and scope of the following claims.

## Claims

1. A kit for a rotary encoder, comprising:
a plurality of signal generating members for generating mutually different signals, any selected one of said signal generating members being able to be attached in an exchangeable manner to a rotary body; and
a signal sensing unit arranged in close proximity to one selected signal generating member attached to said rotary body, for sensing a signal generated due to a rotation of said signal generating member;
wherein said plurality of signal generating members are respectively formed in such a manner that numbers of signal-cycles and signal-intervals in signals generated during a unit rotation of respective signal generating members are different from each other, while products of said numbers of signal-cycles multiplied by said signal-intervals in said signals are generally identical to each other.

2. A kit for a rotary encoder, as set forth in claim 1, wherein each of said plurality of signal generating members is a circular plate member having an outer circumferential surface, and wherein a signal generating element for generating said signal is provided on said outer circumferential surface of each signal generating member.

3. A kit for a rotary encoder, as set forth in claim 2, wherein said plurality of signal generating members have outer diameters generally identical to each other.

4. A kit for a rotary encoder, as set forth in claim 1, wherein each of said plurality of signal generating members is an annular member having an inner circumferential surface, and wherein an attachment portion for detachably attaching each signal generating member to the rotary body is provided in said inner circumferential surface.

5. A kit for a rotary encoder, as set forth in claim 4, wherein said plurality of signal generating members have inner diameters generally identical to each other.

6. A kit for a rotary encoder, as set forth in claim 1, wherein each of said plurality of signal generating members includes a signal generating element comprising at least one tooth.

7. A kit for a rotary encoder, as set forth in claim 1, wherein each of said plurality of signal generating members includes a signal generating element comprising at least one magnetized pattern.

8. A rotary encoder, comprising:
a first signal generating member for generating a first signal, said first signal generating member being able to be attached to a rotary body, in a manner as to be exchangeable with a second signal generating member for generating a second signal different from said first signal; and
a signal sensing unit arranged in close proximity to said first signal generating member attached to said rotary body, for sensing said first signal generated due to a rotation of said first signal generating member;
wherein said first signal generating member is formed in such a manner that a number of signal-cycles and a signal-interval in said first signal generated during a unit rotation of said first signal generating member is different from a number of signal-cycles and a signal-interval in said second signal generated during a unit rotation of said second signal generating member, while a product of said number of signal-cycles multiplied by said signal-interval in said first signal is generally identical to a product of said number of signal-cycles multiplied by said signal-interval in said second signal.
